# FASCICULE DE BREVET EUROPEEN

(11) **EP 2 912 395 B1**
(45) Date de publication et mention de la délivrance du brevet: **23.03.2022**
(21) Numéro de dépôt: 13788713.9
(22) Date de dépôt: 24.10.2013
(51) Int. Cl.: F28D 20/02, F01P 7/14, F01P 11/20, F02B 29/04, F02N 19/10, F28D 1/04, F28D 21/00

(54) **MODULE DE REFROIDISSEMENT D'UN MOTEUR DE VÉHICULE AUTOMOBILE, ET PROCÉDÉ DE PILOTAGE CORRESPONDANT**
MODUL ZUR KÜHLUNG EINES MOTORS EINES KRAFTFAHRZEUGS UND ZUGEHÖRIGES STEUERUNGSVERFAHREN
MODULE FOR COOLING A MOTOR VEHICLE ENGINE, AND CORRESPONDING CONTROL METHOD

(30) Priorité: 25.10.2012 FR 1260198
(43) Date de publication de la demande: 02.09.2015
(73) Titulaire: Valeo Systemes Thermiques, 78320 Le Mesnil-Saint-Denis Cedex (FR)
(72) Inventeur: AZZOUZ, Kamel, 75012 Paris (FR)
(74) Mandataire: Valeo Systèmes Thermiques
(86) Numéro de dépôt international: PCT/EP2013/072231
(87) Numéro de publication internationale: WO 2014/064178

(56) Documents cités:
- EP-A1- 0 499 071
- WO-A1-98/24647
- DE-A1- 3 245 026
- DE-A1- 19 727 277
- US-A- 5 871 041
- US-A- 5 896 833
- US-B1- 6 202 602

## Description

L'invention concerne un module de refroidissement d'un moteur de véhicule automobile.

Un domaine d'application préférentiel de l'invention est celui des moteurs thermiques suralimentés. Les moteurs thermiques suralimentés, ou turbo-compressés, en particulier les moteurs diesel, sont alimentés en air comprimé appelé air de suralimentation provenant d'un turbo-compresseur actionné par les gaz d'échappement du moteur.

Actuellement, pour les véhicules à moteur thermique, il est connu de refroidir ce dernier à l'aide d'un circuit utilisant un fluide caloporteur, à savoir le liquide de refroidissement du moteur comportant généralement un mélange d'eau et d'antigel comme du glycol.

L'invention est en particulier du domaine des moteurs thermiques associés à un échangeur thermique particulier, encore appelé refroidisseur d'air de suralimentation (en abrégé RAS), pour refroidir l'air de suralimentation du moteur.

En effet, la compression de l'air a pour effet d'échauffer l'air qui se trouve à une température trop élevée et il est souhaitable, pour un bon fonctionnement du moteur, de de le refroidir afin d'abaisser sa température avant son admission dans les cylindres du moteur.

Lorsque l'air de suralimentation étant refroidi grâce à un tel refroidisseur, on parle couramment de refroidissement indirect.

Un tel refroidisseur peut être implanté dans un endroit choisi du compartiment moteur, en particulier près du moteur, et assure notamment la fonction d'admission de l'air de suralimentation vers chacun des cylindres du moteur.

Ce refroidisseur a pour fonction de refroidir l'air de suralimentation par échange thermique avec un autre fluide comme de l'air extérieur ou un liquide comme le liquide de refroidissement, formant ainsi un échangeur du type air/air ou liquide/air.

En particulier, dans le cas d'un refroidisseur air/eau, le liquide de refroidissement provient généralement d'un circuit basse température comprenant de façon connue un radiateur basse température.

Toutefois, par temps froid, le démarrage à froid du moteur entraîne une surconsommation évaluée entre 15% et 20% couplée avec un rejet de polluants de type hydrocarbures imbrûlés. Cette surconsommation s'explique entre autres par l'existence de frottement interne moteur plus importante durant la phase de montée en température moteur et également par la mauvaise combustion due à un niveau de température de parois de zones de combustion inférieur à un seuil de température optimal.

Pour remédier à cet inconvénient, il est connu de disposer un dispositif de chauffage électrique, comprenant par exemple des résistances électriques pour réchauffer l'air de suralimentation du moteur avant son admission au moteur, pendant la phase de démarrage à froid du moteur. Il est également connu d'utiliser une source de chaleur latente comprenant un accumulateur de calories (voir les documents US5896833A et DE19727277A1). La fixation d'un tel accumulateur de calories à un radiateur est en outre connue en soi du document US6202602B1.

L'invention a pour objectif de proposer un module de refroidissement permettant d'améliorer encore la montée en température du moteur par temps froid.

À cet effet, l'invention a pour objet un module de refroidissement selon la revendication 1.

Ainsi, cette troisième boucle forme un dispositif de montée en température qui s'intègre dans le module de refroidissement moteur.

En outre, en utilisant un matériau à changement de phase intégré dans la première boucle haute température et reliée à la deuxième boucle basse température, de l'énergie issue de la première boucle haute température peut être stockée en fonctionnement normal et être restituée au flux gazeux traversant l'échangeur thermique, tel que l'air de suralimentation, via la deuxième boucle basse température.

Un tel dispositif dispose d'une grande capacité d'accumulation thermique et d'une excellente cinétique thermique, ce qui permet un chauffage et ainsi une montée rapide de la température de l'air d'alimentation moteur en sortie de l'échangeur thermique.

Ledit module de refroidissement peut en outre comporter une ou plusieurs caractéristiques suivantes, prises séparément ou en combinaison :
- l'accumulateur comprend un matériau à changement de phase, tel qu'un composé eutectique ;
- la température de changement de phase du matériau à changement de phase est comprise entre 80°C et 100°C ;
- la chaleur latente du matériau à changement de phase est de l'ordre de 391 KJ/m³;
- la deuxième boucle de refroidissement du second fluide caloporteur est une boucle de circulation du second fluide caloporteur à une température inférieure à la température du premier fluide caloporteur circulant dans la première boucle de refroidissement du moteur ;

L'invention concerne aussi un procédé de pilotage d'un module de refroidissement d'un moteur de véhicule automobile selon la revendication 5,

D'autres caractéristiques et avantages de l'invention apparaîtront plus clairement à la lecture de la description suivante, donnée à titre d'exemple illustratif et non limitatif, et des dessins annexés parmi lesquels :
- la figure 1 représente de façon schématique les connexions fluidiques d'un circuit d'un module de refroidissement d'un moteur thermique de véhicule automobile comprenant une boucle haute température, une boucle basse température et une troisième boucle intermédiaire de chauffage du fluide basse température,
- la figure 2 est un graphe représentant l'évolution du flux énergétique d'un matériau à changement de phase en ordonnées en fonction de la température d'un fluide caloporteur en abscisse, avec une première courbe d'évolution selon le sens croissant de la température et une deuxième courbe d'évolution selon le sens décroissant de la température,
- la figure 3 représente de façon schématique les connexions fluidiques du circuit du module de refroidissement de la figure 1 piloté en mode chauffage du fluide basse température lors d'une phase de stockage de calories du fluide haute température,
- la figure 4 représente de façon schématique les connexions fluidiques du circuit du module de refroidissement de la figure 1 piloté en mode chauffage du fluide basse température lors d'une phase de restitution de calories stockées au fluide basse température,
- la figure 5a représente de façon partielle une vue éclatée du module de refroidissement comprenant une source de chaleur de la troisième boucle intermédiaire intégrée dans une boîte collectrice de fluide d'un radiateur haute température,
- la figure 5b représente de façon partielle une vue éclatée du module de refroidissement comprenant une source de chaleur de la troisième boucle intermédiaire intégrée dans chaque boîte collectrice de fluide d'un radiateur haute température, et
- la figure 6 représente de façon partielle un module de refroidissement ne correspondant pas à l'invention,

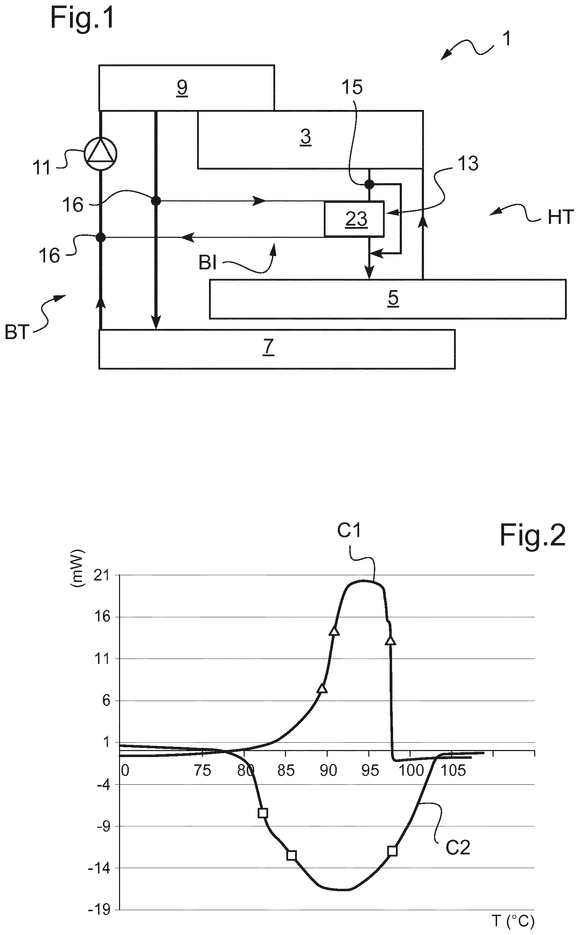

Les figures 1, 3 et 4 représentent de façon schématiques les connexions fluidiques des différents circuits, ces figures ne présument en aucun cas d'un agencement mécanique des éléments entre eux.

Dans ces figures, les éléments sensiblement identiques portent les mêmes références.

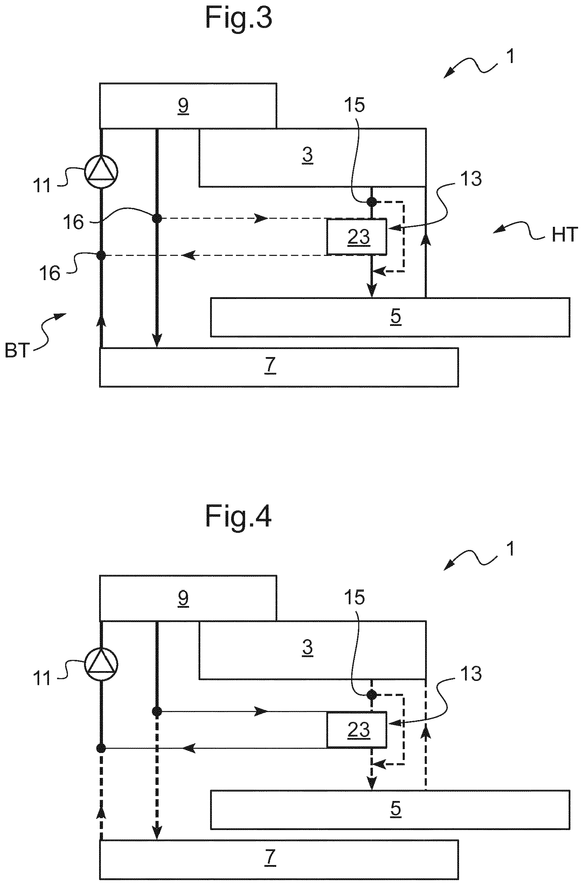

Sur les figures 3 et 4, on a représenté de façon schématique les conduites de circulation d'un fluide en traits pleins lorsque ce fluide circule dans les conduites et en pointillés en cas d'absence de circulation du fluide.

L'invention concerne un module de refroidissement 1 d'un moteur 3, en particulier un moteur thermique, tel qu'un moteur diesel de véhicule automobile.

Le module de refroidissement 1 comprend une première boucle HT dite haute température, et une deuxième boucle BT dite basse température, dans lesquelles circule un fluide caloporteur. On prévoit notamment un premier fluide caloporteur circulant dans la première boucle HT et un second fluide caloporteur circulant dans la deuxième boucle BT. Chaque fluide caloporteur est à titre d'exemple un liquide de refroidissement du moteur 3, tel que de l'eau glycolée, c'est-à-dire un mélange d'eau et de glycol.

On entend par haute température, la température du premier fluide caloporteur par exemple de l'ordre de 110°C ; la basse température est la température du second fluide caloporteur par exemple de l'ordre de 55°C à 58°C.

Le second fluide caloporteur circulant dans la deuxième boucle basse température BT présente donc une température inférieure à celle du premier fluide caloporteur circulant dans la première boucle haute température HT.

La première boucle haute température HT est une boucle de refroidissement du premier fluide caloporteur à destination du moteur 3.

Selon le mode de réalisation décrit, le module de refroidissement 1 comprend un radiateur dit haute température 5 qui fait partie de la première boucle haute température HT.

Le premier fluide caloporteur est par exemple mis en mouvement dans la première boucle haute température HT par une pompe de circulation mécanique (non représentée) au niveau du moteur 3. Le premier fluide caloporteur circule ainsi entre le moteur 3 et le premier radiateur haute température 5.

La deuxième boucle basse température BT comprend quant à elle un deuxième radiateur basse température 7.

Le module de refroidissement 1 comprend de plus un échangeur thermique 9, en particulier pour refroidir l'air de suralimentation du moteur thermique. Un tel échangeur thermique 9 est appelé refroidisseur d'air de suralimentation ou « RAS », également connu sous la dénomination de Water Charged-Air Cooler en anglais ou « WCAC ».

Un tel échangeur thermique peut être un échangeur dit « air-eau », c'est-à-dire un échangeur dans lequel les fluides qui échangent de la chaleur sont l'air et l'eau. Dans le cas d'un refroidisseur d'air de suralimentation, l'eau est de préférence le liquide de refroidissement provenant de la boucle de refroidissement dite basse température BT ; dans notre exemple l'eau glycolée. Le refroidissement de l'air de suralimentation est généralement dit indirect lorsque l'air de suralimentation du moteur 3 est refroidi par un tel échangeur thermique 9.

La deuxième boucle basse température BT comporte de plus une pompe de circulation 11 électrique pour la mise en mouvement du second fluide caloporteur. Cette pompe de circulation 11 est agencée entre le deuxième radiateur basse température 7 et l'échangeur thermique 9.

Le second fluide caloporteur, ou liquide de refroidissement, circule donc entre le deuxième radiateur basse température 7 et l'échangeur thermique 9.

Par ailleurs, la première boucle haute température HT peut comprendre un réservoir d'expansion (non illustré).

Plus précisément, on peut prévoir un réservoir d'expansion (non représenté) entre le deuxième radiateur basse température 7 et le premier radiateur haute température 5. Ce réservoir d'expansion est relié au circuit hydraulique du premier fluide caloporteur et permet d'absorber les variations de volume du premier fluide caloporteur en fonction de la température.

Le module de refroidissement 1 comporte en outre une troisième boucle intermédiaire BI de chauffage du second fluide caloporteur à destination de l'échangeur thermique 9.

En effet, en cas de température extérieure froide, il peut être nécessaire de réchauffer l'air de suralimentation pour un meilleur fonctionnement du moteur 3. Pour ce faire, le second fluide caloporteur est chauffé avant de retourner dans l'échangeur thermique 9.

Dans ce cas, le fonctionnement de l'échangeur thermique 9 est inversé car il n'est plus utilisé pour refroidir l'air de suralimentation, mais il est utilisé en tant qu'échangeur thermique pour céder de la chaleur à l'air de suralimentation grâce au second fluide caloporteur chauffé via cette troisième boucle intermédiaire BI.

La troisième boucle intermédiaire BI est donc connectée fluidiquement à la deuxième boucle basse température BT dans laquelle circule le second fluide caloporteur à destination de l'échangeur thermique 9.

Avantageusement, la chaleur peut être puisée au niveau de la première boucle haute température HT, et dans ce cas la troisième boucle intermédiaire BI est connectée à la première boucle de température haute température HT.

Cette troisième boucle intermédiaire BI est couplée à une source de chaleur 13.

La source de chaleur 13 comprend par exemple un moyen de stockage de calories à chaleur latente.

Il peut s'agir notamment d'un accumulateur thermique 23 comprenant un matériau à changement de phase connu sous le sigle MCP ou PCM en anglais.

Ce matériau à changement de phase est choisi de façon à ce que, lorsque l'accumulateur 23 est traversé par le premier fluide caloporteur prévu suffisamment chaud, c'est-à-dire à une température supérieure à la température de fusion du MCP, ce dernier fond et par conséquent emmagasine de la chaleur par changement de phase solide-liquide. L'énergie latente emmagasinée pourra alors être déstockée en faisant circuler dans l'accumulateur 23 le second fluide caloporteur, prévu à une température inférieure à la température de fusion du MCP.

En effet, en référence à la figure 2, une première courbe C1 illustre la relation entre le flux thermique du MCP en ordonnée en (mW) et la température T en (°C) lorsque la température est augmentée, avec un changement d'état de phase, ici une fusion du matériau pour une température de l'ordre de 80°C à 100°C.

Une deuxième courbe C2 illustre la relation entre le flux thermique du MCP en ordonnées en (mW) et la température T en (°C), lorsque la température est abaissée, avec un changement d'état de phase, ici une solidification du matériau sur une plage de température de 100°C à 80°C.

Selon l'exemple choisi, la plage de température de changement de phase du MCP est de l'ordre de 80°C à 100°C, en particulier de 90°C. À titre d'exemple illustratif, la chaleur latente de changement de phase est de l'ordre de 391 kJ/m³.

Le matériau à changement de phase peut être un composé eutectique.

Ce matériau à changement de phase peut être organique ou inorganique.

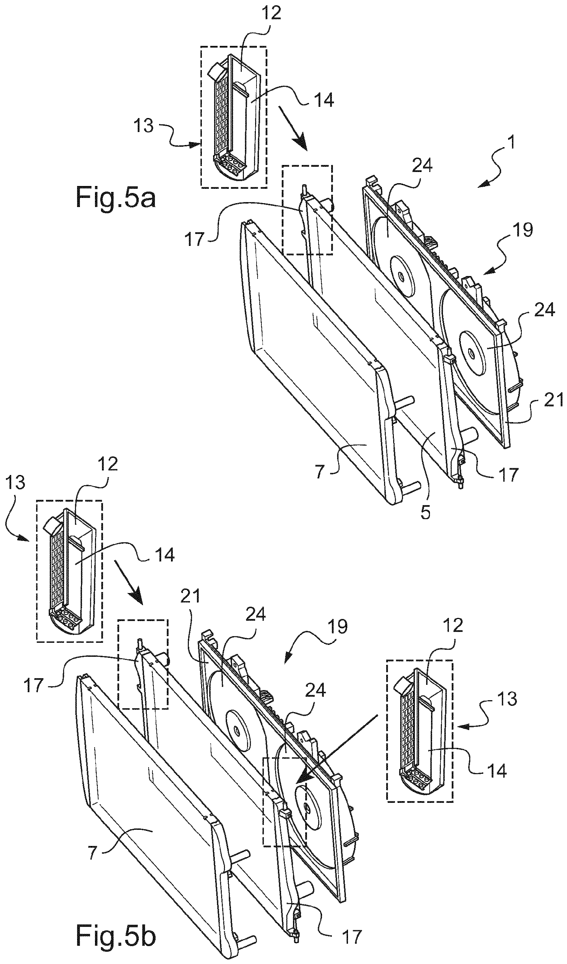

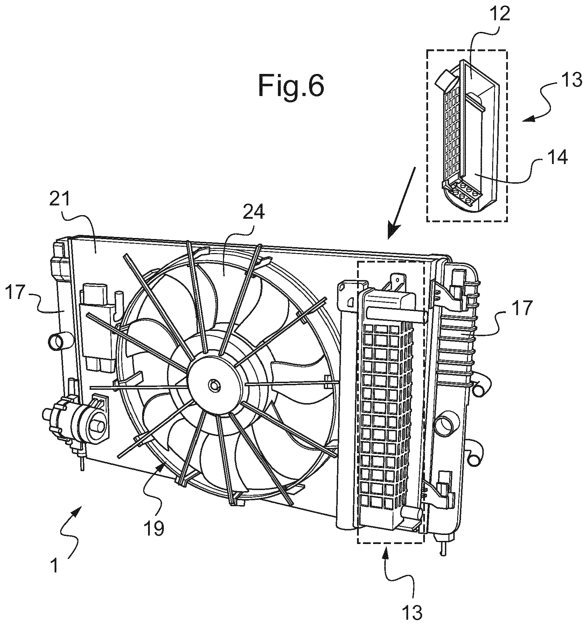

À titre d'exemple illustratif, l'accumulateur 23 peut comporter une enveloppe externe 12 étanche et définissant un espace intérieur 14 destiné à être traversé par un fluide caloporteur. Le matériau à changement de phase peut être agencé dans cet espace intérieur 14 par exemple sous la forme de capsules ou encore peut être agencé à l'intérieur de tubes dans l'espace intérieur 14 de l'accumulateur 23 (cf figures 5a à 6).

Selon le mode de réalisation décrit, l'accumulateur 23 fait partie de la première boucle haute température HT de façon à pouvoir être traversé par le premier fluide caloporteur à haute température et ainsi récupérer de la chaleur du premier fluide caloporteur haute température.

Cet accumulateur 23 est également connecté à la deuxième boucle basse température BT de façon à pouvoir selon les besoins réchauffer le second fluide caloporteur à destination de l'échangeur thermique 9 en restituant la chaleur emmagasinée lorsqu'il est traversé par ce second fluide caloporteur à destination de l'échangeur thermique 9.

Pour ce faire, en se référant de nouveau à la figure 1, le module de refroidissement 1 comprend un premier moyen de contrôle tel qu'une première valve 15 pour autoriser ou empêcher la circulation du premier fluide caloporteur de la première boucle haute température HT dans l'accumulateur 23.

Ainsi, en phase de stockage d'énergie, la première valve 15 est commandée de façon à autoriser la circulation du premier fluide caloporteur haute température dans l'accumulateur 23 (cf figure 3).

Lorsque la première valve 15 est commandée pour empêcher la circulation du premier fluide caloporteur dans l'accumulateur 23, l'accumulateur 23 est contourné ou by-passé.

De même, le module de refroidissement 1 comprend un deuxième moyen de contrôle 16, comprenant par exemple au moins une deuxième valve 16, pour autoriser ou empêcher la circulation du second fluide caloporteur de la deuxième boucle basse température BT dans l'accumulateur 23.

Dans l'exemple illustré, le module de refroidissement 1 comprend deux deuxièmes valves 16.

Ces deuxièmes valves 16 permettent également d'autoriser ou d'empêcher la circulation du second fluide caloporteur dans le deuxième radiateur basse température 7. Ces deuxièmes valves 16 permettent donc de court-circuiter sélectivement l'entrée et la sortie du deuxième radiateur basse température 7 pour forcer le second fluide caloporteur de la boucle basse température BT à circuler dans l'accumulateur 23.

Ainsi, en phase de restitution de chaleur au second fluide caloporteur par l'accumulateur 23 MCP, les deuxièmes valves 16 sont commandées de façon à autoriser la circulation du second fluide caloporteur dans l'accumulateur 23 et empêcher la circulation du second fluide caloporteur dans le radiateur basse température BT (cf figure 4).

Par ailleurs, cette source de chaleur 13, telle qu'un accumulateur MCP 23, peut être agencée au niveau du premier radiateur haute température 5.

Plus précisément, comme l'illustre la figure 5a, le premier radiateur haute température 5 présente deux boîtes collectrices 17 du premier fluide caloporteur, aussi appelées boîtes à eau, et l'accumulateur 23 peut être agencé indifféremment sur l'une ou l'autre des boîtes collectrices 17. Selon un exemple de réalisation, l'accumulateur 23 est intégré dans la boîte collectrice 17 d'entrée du premier fluide caloporteur du premier radiateur haute température 5.

Selon la variante illustrée sur la figure 5b, on prévoit un accumulateur 23 au niveau de chaque boîte collectrice 17 du radiateur haute température 15.

La ou les boîtes collectrices 17 comprenant un accumulateur 23 sont raccordées hydrauliquement à l'échangeur thermique 9 (non visible sur les figures 5a, 5b), et le contrôle des deux deuxièmes valves 16 permet de by-passer le deuxième radiateur basse température 7 lors d'une phase de restitution de chaleur en commandant la circulation du second fluide caloporteur entre l'accumulateur 23 et l'échangeur thermique 9 pour réchauffer le second fluide caloporteur.

De plus, le module de refroidissement 1 peut comporter un système de ventilation 19 porté par une paroi de support 21.

Le système de ventilation 19 est utilisé pour forcer les échanges thermiques avec l'air environnant. Ce système de ventilation 19 peut comprendre un ou plusieurs ventilateurs 24 ou pulseurs. Selon cette configuration, le ou les ventilateurs 24 sont assemblés avec les radiateurs haute température 5, basse température 7.

En se référant de nouveau aux figures 3 et 4, on décrit maintenant un procédé de pilotage du module de refroidissement 1 comprenant un tel accumulateur MCP 23, notamment en mode démarrage par temps froid, lorsque l'on souhaite répondre à un besoin d'augmentation plus rapide de la température moteur.

À cet effet, lors d'une première phase de stockage de calories schématisée sur la figure 3, la circulation du premier fluide caloporteur est assurée dans le premier radiateur haute température 5, par l'intermédiaire de la pompe de circulation moteur (non représentée), et la première valve 15 est commandée de façon à autoriser la circulation du premier fluide caloporteur haute température dans l'accumulateur 23.

Lors de cette première phase, l'accumulateur 23 est traversé par un premier fluide haute température, et le matériau à changement de phase MCP fond et emmagasine de la chaleur par changement de phase solide-liquide. La température du premier fluide caloporteur est ici supérieure à la température de fusion du MCP.

Puis, lors d'une deuxième phase schématisée sur la figure 4, on chauffe le second fluide caloporteur par une restitution de la chaleur latente de l'accumulateur 23 vers le second fluide caloporteur à destination de l'échangeur thermique 9. La température du second fluide caloporteur à réchauffer est ici inférieure à la température de fusion du MCP.

Lors de cette deuxième phase, la circulation du premier fluide caloporteur haute température provenant de la première boucle haute température HT est interrompue. Pour ce faire, la première boucle haute température HT peut être rendue inactive ou l'accumulateur 23 peut être by-passé par la commande de la première valve 15.

De plus, par la commande des deuxièmes valves 16 on interrompt la circulation du second fluide caloporteur dans le deuxième radiateur basse température 7 et on autorise la circulation du second fluide caloporteur à destination de l'échangeur thermique 9 dans l'accumulateur 23.

Le second fluide caloporteur en sortie de l'accumulateur 23 réchauffé est envoyé vers l'échangeur thermique 9.

Cet échangeur thermique 9 passe ainsi en mode « chauffage », avec un transfert de chaleur du second fluide caloporteur provenant de la troisième boucle intermédiaire BI vers l'air de suralimentation du moteur traversant l'échangeur thermique 9, afin de réchauffer cet air de suralimentation. En effet, l'air de suralimentation qui traverse l'échangeur thermique 9 se réchauffe au contact des tubes ou plaques d'échange thermique de l'échangeur thermique 9 préalablement chauffés par la chaleur cédée par l'accumulateur 23.

Ainsi, une telle troisième boucle intermédiaire BI permet de chauffer le second fluide caloporteur ou liquide de refroidissement à destination de l'échangeur thermique 9 qui est donc inversé pour réchauffer l'air de suralimentation le traversant et non plus le refroidir.

De plus, en utilisant une source de chaleur latente comprenant un accumulateur avec un matériau à changement de phase tel que décrit précédemment, c'est directement la chaleur de la première boucle haute température HT qui est puisée pour réchauffer le second fluide caloporteur ou liquide de refroidissement à destination de l'échangeur thermique 9.

## Revendications

1. Module de refroidissement (1) d'un moteur (3) de véhicule automobile, comprenant :
- une première boucle (HT) de refroidissement d'un premier fluide caloporteur à destination du moteur (3),
- une deuxième boucle (BT) de refroidissement d'un second fluide caloporteur comportant un échangeur thermique (9) du type d'un refroidisseur d'air de suralimentation,
le module de refroidissement (1) comprenant en outre une troisième boucle (BI) de chauffage du second fluide caloporteur à destination de l'échangeur thermique (9) couplée à une source de chaleur (13), la troisième boucle (BI) étant connectée à la première boucle (HT) de refroidissement et à la deuxième boucle (BT) de refroidissement du second fluide caloporteur,
la source de chaleur (13) est intégrée dans la première boucle (HT) de refroidissement et est reliée à la deuxième boucle (BT) de refroidissement,
la source de chaleur (13) étant une source de chaleur latente et comprenant un accumulateur de calories (23) configuré pour :
- emmagasiner des calories provenant du premier fluide caloporteur circulant dans la première boucle (HT) de refroidissement lors d'une première phase, et pour
- restituer de la chaleur dudit accumulateur (23) vers le second fluide caloporteur à destination de l'échangeur thermique (9) lors d'une deuxième phase,
le module de refroidissement comprenant un premier moyen de contrôle (15) pour autoriser ou empêcher la circulation du fluide caloporteur de la première boucle (HT) de refroidissement à travers l'accumulateur (23) et
un deuxième moyen de contrôle (16) pour autoriser ou empêcher la circulation du fluide caloporteur à destination de l'échangeur thermique (9) à travers l'accumulateur (23),
**caractérisé en ce que** la première boucle (HT) de refroidissement du premier fluide caloporteur à destination du moteur comporte un premier radiateur (5) et la deuxième boucle (BT) de refroidissement du second fluide caloporteur comprend un deuxième radiateur (7),
le deuxième moyen de contrôle (16) étant configuré pour autoriser la circulation du second fluide caloporteur à destination de l'échangeur thermique (9) à travers l'accumulateur (23) et interrompre la circulation du second fluide caloporteur dans le deuxième radiateur (7), lors de la deuxième phase de restitution de la chaleur,
le premier radiateur (5) comprenant au moins une boite collectrice (17) du premier fluide caloporteur, la source de chaleur (13) étant agencée dans ladite au moins une boite collectrice (17).

2. Module selon la revendication 1, dans lequel l'accumulateur (23) comprend un matériau à changement de phase, tel qu'un composé eutectique.

3. Module selon la revendication 2, dans lequel la température de changement de phase du matériau à changement de phase est comprise entre 80°C et 100°C.

4. Module selon l'une des revendications 2 ou 3, dans lequel la chaleur latente du matériau à changement de phase est de l'ordre de 391 KJ/m³.

5. Procédé de pilotage d'un module de refroidissement (1) selon l'une des revendications 1 à 4,
**caractérisé en ce que** ledit procédé comporte les étapes suivantes :
- on commande la circulation du premier fluide caloporteur circulant dans la première boucle (HT) de refroidissement à travers l'accumulateur (23), pour emmagasiner des calories provenant dudit premier fluide caloporteur,
- on interrompt la circulation du premier fluide caloporteur de la première boucle (HT) de refroidissement à travers l'accumulateur (23), et
- on commande la circulation du second fluide caloporteur à destination de l'échangeur thermique (9) à travers l'accumulateur (23), de façon à restituer de la chaleur dudit accumulateur (23) vers le second fluide caloporteur à destination de l'échangeur thermique (9) pour réchauffer l'air de suralimentation du moteur, et dans lequel on interrompt la circulation du second fluide caloporteur à travers un deuxième radiateur (7) de la deuxième boucle (BT) de refroidissement lors de l'étape de restitution de chaleur dudit accumulateur (23) vers le second fluide caloporteur à destination de l'échangeur thermique (9)

## Patentansprüche

1. Modul zur Kühlung (1) eines Motors (3) eines Kraftfahrzeugs, umfassend:
- eine erste Schleife (HT) zur Kühlung eines ersten Wärmeübertragungsfluids für den Motor (3),
- eine zweite Schleife (BT) zur Kühlung eines zweiten Wärmeübertragungsfluids, die einen Wärmeaustauscher (9) vom Typ eines Ladeluftkühlers aufweist,
wobei das Kühlmodul (1) ferner eine dritte Schleife (BI) zur Erwärmung des zweiten Wärmeübertragungsfluids für den Wärmeaustauscher (9) umfasst, die an eine Wärmequelle (13) gekoppelt ist, wobei die dritte Schleife (BI) an die erste Kühlschleife (HT) und an die zweite Schleife (BT) zur Kühlung des zweiten Wärmeübertragungsfluids angeschlossen ist,
die Wärmequelle (13) in die erste Kühlschleife (HT) integriert und mit der zweiten Kühlschleife (BT) verbunden ist,
wobei die Wärmequelle (13) eine latente Wärmequelle ist und einen Kalorienspeicher (23) umfasst, der dazu ausgebildet ist:
- bei einer ersten Phase Kalorien vom ersten Wärmeübertragungsfluid einzuspeichern, das in der ersten Kühlschleife (HT) strömt, und
- bei einer zweiten Phase Wärme vom Speicher (23) an das zweite Wärmeübertragungsfluid für den Wärmeaustauscher (9) abzugeben,
wobei das Kühlmodul ein erstes Steuermittel (15) zur Gestattung oder Verhinderung der Durchströmung des Wärmeübertragungsfluids der ersten Kühlschleife (HT) durch den Speicher (23) und
ein zweites Steuermittel (16) zur Gestattung oder Verhinderung der Durchströmung des Wärmeübertragungsfluids für den Wärmeaustauscher (9) durch den Speicher (23) umfasst,
**dadurch gekennzeichnet, dass** die erste Schleife (HT) zur Kühlung des ersten Wärmeübertragungsfluids für den Motor einen ersten Kühler (5) aufweist und die zweite Schleife (BT) zur Kühlung des zweiten Wärmeübertragungsfluids einen zweiten Kühler (7) umfasst,
wobei das zweite Steuermittel (16) dazu ausgebildet ist, die Durchströmung des zweiten Wärmeübertragungsfluids für den Wärmeaustauscher (9) durch den Speicher (23) zu gestatten und die Durchströmung des zweiten Wärmeübertragungsfluids im zweiten Kühler (7) bei der zweiten Phase des Abgebens der Wärme zu unterbrechen,
wobei der erste Kühler (5) mindestens einen Sammelkasten (17) des ersten Wärmeübertragungsfluids umfasst, wobei die Wärmequelle (13) in dem mindestens einen Sammelkasten (17) angeordnet ist.

2. Modul nach Anspruch 1, wobei der Speicher (23) ein Phasenwechselmaterial wie etwa eine eutektische Verbindung umfasst.

3. Modul nach Anspruch 2, wobei die Phasenwechseltemperatur des Phasenwechselmaterials zwischen 80 °C und 100 °C beträgt.

4. Modul nach einem der Ansprüche 2 oder 3, wobei die latente Wärme des Phasenwechselmaterials in der Größenordnung von 391 KJ/m³ liegt.

5. Verfahren zur Steuerung eines Kühlmoduls (1) nach einem der Ansprüche 1 bis 4,
**dadurch gekennzeichnet, dass** das Verfahren die folgenden Schritte aufweist:
- es wird die Durchströmung des ersten Wärmeübertragungsfluids gesteuert, das in der ersten Kühlschleife (HT) durch den Speicher (23) strömt, um Kalorien vom ersten Wärmeübertragungsfluid einzuspeichern,
- es wird die Durchströmung des ersten Wärmeübertragungsfluids von der ersten Kühlschleife (HT) durch den Speicher (23) unterbrochen, und
- es wird die Durchströmung des zweiten Wärmeübertragungsfluids für den Wärmeaustauscher (9) durch den Speicher (23) gesteuert, um Wärme vom Speicher (23) an das zweite Wärmeübertragungsfluid für den Wärmeaustauscher (9) abzugeben, um die Ladeluft des Motors zu erwärmen, und wobei die Durchströmung des zweiten Wärmeübertragungsfluids durch einen zweiten Kühler (7) der zweiten Kühlschleife (BT) beim Schritt des Abgebens von Wärme vom Speicher (23) an das zweite Wärmeübertragungsfluid für den Wärmeaustauscher (9) unterbrochen wird.

## Claims

1. Cooling module (1) for cooling a motor vehicle engine (3), comprising:
- a first loop (HT) for cooling a first heat-transfer fluid bound for the engine (3),
- a second loop (BT) for cooling a second heat-transfer fluid, having a heat exchanger (9) of the charge-air cooler type,
the cooling module (1) also comprising a third loop (BI) for heating the second heat-transfer fluid bound for the heat exchanger (9), which third loop is coupled to a heat source (13), the third loop (BI) being connected to the first, cooling loop (HT) and to the second loop (BT) for cooling the second heat-transfer fluid,
the heat source (13) is integrated in the first, cooling loop (HT) and is connected to the second, cooling loop (BT),
the heat source (13) being a latent heat source and comprising a heat accumulator (23) configured to:
- store the heat from the first heat-transfer fluid circulating in the first, cooling loop (HT) during a first phase, and to
- pass on the heat from said accumulator (23) to the second heat-transfer fluid bound for the heat exchanger (9) during a second phase,
the cooling module comprising a first regulating means (15) for allowing or preventing the circulation of the heat-transfer fluid of the first, cooling loop (HT) through the accumulator (23) and
a second regulating means (16) for allowing or preventing the circulation of the heat-transfer fluid bound for the heat exchanger (9) through the accumulator (23), **characterized in that** the first loop (HT) for cooling the first heat-transfer fluid bound for the engine has a first radiator (5) and the second loop (BT) for cooling the second heat-transfer fluid comprises a second radiator (7),
the second regulating means (16) being configured to allow the circulation of the second heat-transfer fluid bound for the heat exchanger (9) through the accumulator (23) and interrupt the circulation of the second heat-transfer fluid in the second radiator (7), during the second phase of passing on the heat,
the first radiator (5) comprising at least one header tank (17) for the first heat-transfer fluid, the heat source (13) being arranged in said at least one header tank (17).

2. Module according to Claim 1, wherein the accumulator (23) comprises a phase change material, such as a eutectic compound.

3. Module according to Claim 2, wherein the change of phase temperature of the phase change material is between 80°C and 100°C.

4. Module according to either of Claims 2 and 3, wherein the latent heat of the phase change material is around 391 KJ/m³.

5. Method for controlling a cooling module (1) according to one of Claims 1 to 4,
**characterized in that** said method has the following steps:
- commanding the circulation of the first heat-transfer fluid circulating in the first, cooling loop (HT) through the accumulator (23), to store the heat from said first heat-transfer fluid,
- interrupting the circulation of the first heat-transfer fluid of the first, cooling loop (HT) through the accumulator (23), and
- commanding the circulation of the second heat-transfer fluid bound for the heat exchanger (9) through the accumulator (23), so as to pass on the heat from said accumulator (23) to the second heat-transfer fluid bound for the heat exchanger (9) to reheat the charge air of the engine, and wherein the circulation of the second heat-transfer fluid through a second radiator (7) of the second, cooling loop (BT) is interrupted during the step of passing on heat from said accumulator (23) to the second heat-transfer fluid bound for the heat exchanger (9) .
